# NEUE EUROPÄISCHE PATENTSCHRIFT

(11) **EP 0 902 769 B2**
(45) Veröffentlichungstag und Bekanntmachung des Hinweises auf die Entscheidung über den Einspruch: **08.10.2008**
(45) Hinweis auf die Patenterteilung: 15.03.2000
(21) Anmeldenummer: 97923971.2
(22) Anmeldetag: 22.05.1997
(51) Int. Cl.: C04B 24/26

(54) **FLEXIBLE BAUSTOFFMASSEN**
FLEXIBLE BUILDING MATERIAL COMPOUNDS
MATERIAUX DE CONSTRUCTION SOUPLES

(30) Priorität: 23.05.1996 DE 19620817
(43) Veröffentlichungstag der Anmeldung: 24.03.1999
(73) Patentinhaber: Wacker Chemie AG, 81737 München (DE)
(72) Erfinder: HAERZSCHEL, Reinhard, D-84489 Burghausen (DE); HAHNER, Christoph, D-84489 Burghausen (DE)
(74) Vertreter: Schuderer, Michael
(86) Internationale Anmeldenummer: PCT/EP1997/002608
(87) Internationale Veröffentlichungsnummer: WO 1997/044289

(56) Entgegenhaltungen:
- EP-A- 0 295 727
- EP-A- 0 527 322
- DE-A- 3 838 294
- DE-A- 4 321 070
- JP-A- 5 519 912
- V.S. RAMACHANDRAN: 'Concrete Admixtures Handbook', 1984, NOYES PUBLICATIONS,, USA Seiten 340 - 344
- YOSHIHIKO OHAMA: 'Handbook of Polymer-Modified Concrete and Mortars', 1995, NOYES PUBLICATIONS, USA Seiten 16-19 & - 86-89

## Beschreibung

Die Erfindung betrifft die Verwendung von Schutzkolloid-stabilisierten Vinylester-Ethylen-Mischpolymerisaten zur Flexibilisierung von Baustoffmassen.

Für bestimmte Anwendungen im Baubereich, beispielsweise in Dichtungsschlämmen oder für Bauklebemittel, werden hochflexible Beton- oder Mörtelmischungen benötigt. Standardmäßig werden beispielsweise in Dichtungsschlämmen Mörtelmischungen eingesetzt, welche mit emulgatorstabilisierten Acrylatdispersionen modifiziert sind. In der WO-A 92/07804 (AU-A 9186679) sind Bindemittel zur Flexibilisierung von Baustoffen beschrieben, welche Mischungen aus Polyesterharz und Styrol-Acrylat-Copolymeremulsion beinhalten. Aus der EP-A 558980 (US-A 5348993) sind emulgatorstabilisierte Styrol/Acrylat- und Vinylester/Acrylat-Dispersionen als Zusatzstoffe für Baustoffe bekannt. Die Flexibilität wird bei diesen Zusätzen durch die Kunststoffkomponente und die Verwendung von Emulgatoren zur Stabilisierung der Emulsion erhalten. Einen Überblick über den derzeitigen Stand der Technik bei der Flexibilisierung von Baustoffmassen gibt Volkwein, A; Petri, R.; Springenschmid, R; "Protecting concrete by flexible waterproofing slurries", Betonwerk-Fertigteil-Tech. (1988), 54(8) 30-36, 54(9) 72-78.

Nachteilig bei den bisher eingesetzten Emulgator-stabilisierten Styrol-Acrylat-Dispersionen ist, daß diese nur in 2-Komponenten-Systemen (Komponente 1 = Trockenmörtel, Komponente 2 = Dispersion), einsetzbar sind, wohingegen bei Einsatz von redispergierbaren Dispersionspulvern (in 1-Komponenten-Systemen) mit den heutigen Systemen (Vinylacetat-Ethylen-Copolymere) keine ausreichende Flexibilisierung erreicht wird.
Der große Vorteil von Dispersionspulvern gegenüber den Dispersionen ist jedoch, daß man Trockenmörtelmischungen herstellen kann, die an der Baustelle nur noch mit Wasser angemischt werden müssen. Das bringt viele Vorteile, wie erhöhte Rezeptiersicherheit, sichere Handhabung und einfache Gebindeentsorgung.

Auf der Basis von Emulgator-stabilisierten Vinylester-Copolymer-Dispersionen konnten bisher keine Systeme zur Verfügung gestellt werden, welche bezüglich Flexibilität mit Styrol/Acrylat-Copolymer-Dispersionen in Konkurrenz treten konnten.

Aus der DE-A 4206429 (US-A 5348993) sind Bindemittel zur Verbesserung der Flexibilität von Baustoffen auf Basis von Vinylpropionat-Veova9^{R}(VeoVa10^{R})-Emulsionspolymerisaten bekannt, welche in Gegenwart einer Emulgatorkombination aus Ethylenoxid-Propylenoxid-Polyether, ethoxyliertem Alkylphenol und ethoxyliertem Polysaccharid hergestellt werden. Nachteilig ist, daß beispielsweise in der Anwendung in Dichtungsschlämmen keine ausreichende Dehnfähigkeit erreicht wird.

Aus der EP-A 527322 sind Zusatzstoffe für Zementmischungen bekannt, welche aus Ethylen-Vinylacetat-Vinylpivalat-Copolymerisaten bestehen, hergestellt nach dem Emulsionspolymerisationsverfahren in Gegenwart von Emulgator und Schutzkolloid. Hervorgehoben wird die verbesserte Alkalibeständigkeit gegenüber Vinylacetat-Ethylen-Copolymerisaten. Nachteilig ist die für die Flexibilisierung von Baustoffen unzureichende Dehnfähigkeit.

Aus der EP-A 518406 ist die Herstellung von Copolymerisaten von Ethylen, Vinylacetat und von Vinylestern α-verzweigter, tertiärer Carbonsäuren mit 5 oder 9 C-Atomen bekannt, wobei zur Verbesserung der Ethyleneinbaurate Vinylpivalat (VeoVa5^{R}) anstelle von VeoVa9^{R} copolymerisiert wird. Die EP-A 295727 betrifft Ethylen-Vinylacetat-Mischpolymerisate mit Vinylestern α-verzweigter tertiärer Carbonsäuren mit 9 C-Atomen (VeoVa9^{R}) oder 10 C-Atomen (VeoVa10^{R}), wobei für Anstrichmittel mit reduziertem Tack Copolymerisate mit VeoVa9^{R} anstelle VeoVa10^{R} empfohlen werden. Die Flexibilisierung von Baustoffmassen wird weder in der EP-A 518406, noch in der EP-A 295727 behandelt.

Der Erfindung lag die Aufgabe zugrunde, Copolymerisate auf der Basis von Vinylester-Copolymeren zur Verfügung zu stellen, welche sich sowohl in Form wäßriger Dispersionen, und bevorzugt in Form der aus diesen herstellbaren, redispergierbaren Dispersionspulvern, zur Herstellung von hochflexiblen Baustoffmassen, speziell Dichtungsschlämmen, eignen. Das Anforderungsprofil wurde dabei so definiert, daß die entsprechenden Copolymerdispersionen bezüglich Festigkeit und Flexibilität den gebräuchlichen Styrol-Acrylat-Dispersionen zumindest ebenbürtig sein sollten; die entsprechenden Dispersionspulver aber eine deutlich bessere Flexibilisierung bewirken sollten, als herkömmliche Vinylacetat/Ethylen-Dispersionspulver.

Überraschenderweise wurde gefunden, daß durch Zusatz von Schutzkolloid-stabilisierten Mischpolymerisaten von Vinylacetat, Ethylen und Vinylestern aus der Gruppe umfassend Vinyllaurat, Vinylstearat, Vinyl-2-ethylhexanoat, sowie Vinylester von alpha-verzweigten, tertiären Carbonsäuren mit 9 bis 11 C-Atomen welche nach dem Emulsionspolymerisationsverfahren, unter Stabilisierung mit Schutzkolloid, hergestellt wurden, hochflexible Baustoffmassen zugänglich werde, welche bei guter Festigkeit, deutlich höhere Dehnfähigkeit gemäß DIN 53504 aufweisen, als mit Pulvern auf Vinylacetat/Ethylen-Basis modifizierte Baustoffenmassen.

Gegenstand der Erfindung ist die Verwendung von Schutzkolloid-stabilisierten Vinylester-Ethylen-Mischpolymerisaten in Form der in Wasser redispergierbaren Dispersionspulver erhältlich durch radikalische, wäßrige Emulsionspolymerisation von
a) 15 - 80 Gew% Vinylacetat,
b) 5 - 35 Gew% Ethylen,
c) 5 - 60 Gew%, ein oder mehrere Vinylester aus der Gruppe umfassend Vinyllaurat, Vinylstearat, Vinyl-2-ethylhexanoat sowie Vinylester von α-verzweigten,tertiären Carbonsäuren mit 9 bis 11 C-Atomen, und
d) 0 - 10 Gew%, weitere copolymerisierbare ethylenisch ungesättigte Monomere, mit der Maßgabe, daß kein Emulgator enthalten ist,
zur Herstellung von flexiblen Baustoffmassen auf der Basis von mineralischen Bindemitteln mit verbesserter Reißdehnung gemäß DIN 53504 im Vergleich zu Vinylacetat/Ethylen-Dispersionspulver, wobei die Baustoffmassen der Gruppe Dichtungsschlämme, Baukleber, Fugenmörtel, Reparaturmörtel, rißüberbrückende Putze angehören.

Die Angaben in Gew% beziehen sich dabei jeweils auf das Gesamtgewicht des Copolymerisats.

Comonomere c) sind, wie VeoVa9^{R}, VeoVa10^{R}und VeoVa11^{R} (Versaticsäure-Vinylester derFa. Shell mit 9, 10 bzw. 11 C-Atomen). Besonders bevorzugt werden die Vinylester von α-verzweigten, tertiären Carbonsäuren mit 9 bis 11 C-Atomen, beispielsweise VeoVa9^{R} , VeoVa10^{R} oder VeoVa11^{R}.

Geeignete Comonomere d) sind beispielsweise Hilfsmonomere zur Stabilisierung wie α,β-monoethylenisch ungesättigte Mono- und Dicarbonsäuren und deren Amide oder Nitrile, wie Acrylsäure, Methacrylsäure, Acrylamid; ethylenisch ungesättigte Sulfonsäuren bzw. deren Salze, vorzugsweise Vinylsulfonsäure, 2-Acrylamido-propansulfonat; N-Vinylpyrrolidon.

Besonders bevorzugt verwendet werden Vinylester-Ethylen-Copolymerisate enthaltend
a) 40 - 70 Gew% Vinylacetat,
b) 10 - 30 Gew% Ethylen,
c) 20 - 40 Gew%, ein oder mehrere Vinylester von α-verzweigten, tertiären Carbonsäuren mit 9, 10 oder 11 C-Atomen.

Die Herstellung der genannten Schutzkolloid-stabilisierten Vinylester-Ethylen-Copolymerisate erfolgt nach dem Verfahren der radikalischen, wäßrigen Emulsionspolymerisation, unter Stabilisierung mit Schutzkolloid. Als Polymerisationsmedium wird vorzugsweise Wasser eingesetzt; Mischungen aus Wasser und mit Wasser mischbaren Flüssigkeiten können auch eingesetzt werden. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente(n).

Die Polymerisation wird in der Regel in einem Temperaturbereich von 20 bis 95°C, vorzugsweise 25 bis 65°C, durchgeführt. Der Ethylendruck liegt dabei zwischen 10 und 85 bar. Die Initiierung erfolgt mit den für die Emulsionspolymerisation üblicherweise eingesetzten wasserlöslichen Radikalbildner, die vorzugsweise in Mengen von 0.01 bis 5.0 Gew%, bezogen auf das Gesamtgewicht der Monomeren, eingesetzt werden. Beispiele hierfür sind Wasserstoffperoxid, t-Butylperoxid; Alkylhydroperoxide, wie t-Butylhydroperoxid; Kalium-, Natrium- und Ammoniumperoxodisulfat; Azoverbindungen, wie Azobisisobutyronitril oder Azobiscyanovaleriansäure. Bevorzugt werden die genannten radikalischen Initiatoren in bekannter Weise mit 0.01 bis 1.0 Gew%, bezogen auf das Gesamtgewicht der Monomeren, Reduktionsmittel kombiniert. Geeignet sind zum Beispiel Alkali-Formaldehydsulfoxylate, Hydroxymethansulfinsäure, Natriumsulfit und Ascorbinsäure. Bei der Redoxinitiierung werden dabei vorzugsweise eine oder beide Redox-Katalysatorkomponenten während der Polymerisation dosiert. Zusätzlich kann die Reaktivität des Initiatorsystems durch Zusatz von Metallionen, die in mehreren Wertigkeitsstufen auftreten können, erhöht werden. Bevorzugt verwendet man Eisen(II)-Ionen, beispielsweise in Form von Eisen(II)sulfat.

Als Dispergiermittel zur Stabilisierung des Polymerisationsansatzes werden ausschließlich Schutzkolloide, ohne Emulgatorzusatz, eingesetzt; besonders bevorzugt in Mengen von 1 bis zu 20 Gew%, bezogen auf das Gesamtgewicht der Monomeren. Als Schutzkolloide eignen sich beispielsweise Cellulosen wie Hydroxyethylcellulose, Hydroxypropylcellulose und Carboxymethylcellulose; Polyvinylalkohole, Polyethylenglykol, Polyvinylpyrrolidone, Poly(meth)acrylsäure; Vorzugsweise werden teilverseifte Polyvinylalkohole eingesetzt. Besonders bevorzugt werden teilverseifte Polyvinylalkohole mit einem Hydrolysegrad von 75 bis 95 Mol% und einer Höppler-Viskosität (4 %-igen Lösung in Wasser bei 20°C) von 4 bis 35 mPas.

Nach Abschluß der Polymerisation wird die Dispersion auf einen Feststoffgehalt von 30 bis 65 Gew%, vorzugsweise 45 bis 55 Gew%, eingestellt. Die Schutzkolloid-stabilisierten Vinylester-Ethylen-Mischpolymerisate werden in Form von in Wasser redispergierbaren Dispersionspulvern den Baustoffen zugegeben.

Die Herstellung der Dispersionspulver erfolgt vorzugsweise mittels Sprühtrocknung. Die Trocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann.

Vor der Sprühtrocknung wird die nach der Emulsionspolymerisation erhaltene Schutzkolloid-stabilisierte Vinylester-Ethylen-Copolymerdispersion vorzugsweise auf einen Festgehalt von 20 bis 60 % eingestellt. Der Festgehalt ist abhängig von der Art und Menge weiterer Zusatzstoffe, welche bei der Trocknung zugegeben werden. Beispielsweise können der Dispersion noch weitere Mengen, vorzugsweise 2 bis 20 Gew%, bezogen auf das vinylester-Ethylen-Mischpolymerisat, an obengenanntem Schutzkolloid als Verdüsungshilfe zugegeben werden.

Bei der Verdüsung hat sich vielfach ein Gehalt von bis zu 1.5 Gew% Antischaummittel, bezogen auf das Mischpolymerisat, als günstig erwiesen. Flüssige Antischaummittel werden normalerweise der Dispersion vor dem Trocknen zugesetzt, feste können in die trockene Dispersionspulverzusammensetzung eingemischt werden.

Die mittlere Teilchengröße der Dispersionspulverteilchen beträgt im allgemeinen 10 bis 400 µm. Die Pulver redispergieren in Wasser wieder zu einer Dispersion mit Teilchengrößen zwischen 0.1 und 5.0 µm.

Zur Erhöhung der Lagerfähigkeit durch Verbesserung der Verblockungsstabilität kann das erhaltene Pulver mit einem Antiblockmittel (Antibackmittel), vorzugsweise 3 bis 25 Gew%, bezogen auf das Gesamtgewicht polymerer Bestandteile, versetzt werden. Beispiele für Antiblockmittel sind fein gemahlene Aluminiumsilikate, Kieselgur, kolloidales Silicagel, pyrogene Kieselsäure, Fällungskieselsäure, Micro-Silica, Leichtspat, Kaolin, Talkum, Zemente, Diatomeenerde, Magnesiumcarbonat und/oder Calciumcarbonat oder Magnesiumhydrosilikat.

Weitere, in bevorzugten Ausführungsformen enthaltene Bestandteile der Dispersionspulverzusammensetzung sind beispielsweise Farbstoffe, Füllstoffe, Schaumstabilisatoren, Hydrophobierungsmittel. Die Zugabe dieser Bestandteile kann vor oder auch nach der Sprühtrocknung erfolgen.

Die Schutzkolloid-stabilisierten Vinylester-Ethylen-Mischpolymerisate werden in Form deren Dispersionspulverzusammensetzungen zur Modifizierung von Baustoffmassen auf Basis von mineralischen Bindemitteln, beispielsweise Zement, Gips oder Kalkmörtel, eingesetzt wobei die Baustoffmassen der Gruppe Dichtungsschlämme, Baukleber, Fugenmörtel, Reparaturmörtel, rißüberbrückende Putze angehören.

Beispiele für mineralische Bindemittel sind Zement wie Portland-, Aluminat-, Trass-, Hüllen-, Magnesia-, Phosphatzement, Gips wie Calciumsulfat-Halbhydrat in Form von Baugips, Stuckgips oder Modellgips und/oder Kalk wie Kalkhydrat. Neben den mineralischen Bindemitteln und Wasser enthalten die Baustoffmassen noch Zuschlagstoffe wie Sande, beispielsweise Quarzsand oder Quarzmehl, Kiese, Kreiden, Dolomit, Leichtspat, jeweils in der für die jeweilige Anwendung üblichen Körnung und Menge.

Weitere Beispiele für Zuschlagstoffe sind Fasern wie Acrylat-, Polyethylen- oder Cellulosefasern.

Weitere für den Aufbau von Baustoffmassen übliche Zusatzstoffe sind Verdickungsmittel, beispielsweise organische Verdickungsmittel wie Celluloseether und anorganische wie Bentonit, Pigmente, Netzmittel, Dispergierhilfsmittel, Konservierungsstoffe, Antischaummittel, Verfilmungshilfsmittel, Frostschutzmittel.

Am meisten bevorzugt ist die Verwendung zur Herstellung hochflexibler, zementärer Dichtungsschlämmen. Eine für Dichtungsschlämme typische Trockenformulierung ist beispielsweise:
10 bis 50 Gew.Teile Zement,
10 bis 50 Gew.Teile Quarzsand,
1.0 bis 10 Gew.Teile Fasern,
0.1 bis 1.0 Gew.Teile Zementverflüssiger,
0.1 bis 1.0 Gew.Teile Entschäumer.

Zur Flexibilisierung der Baustoffmassen werden die Schutzkolloid-stabilisierten Vinylester-Ethylen-Mischpolymerisate in Form der in Wasser redispergierbaren Dispersionspulver vorzugsweise in einer Menge von 10 bis 50 Gew%, Copolymeranteil bezogen auf Gesamtgewicht der Trockenformulierung, eingesetzt. Die gebrauchsfertige Baustoffmassen-Zusammensetzung wird durch Anrühren mit Wasser hergestellt, wobei die Wassermenge vorzugsweise so bemessen wird, daß 25 bis 60 Gew.Teile Wasser auf 100 Gew.Teile Trockenformulierung eingesetzt werden.

Das Dispersionspulver wird mit den Bestandteilen der Trockenformulierung vermischt und dieses Gemisch mit der berechneten Menge an Anmachwasser angerührt.

Mit den erfindungsgemäß zu verwendenden Schutzkolloid-stabilisierten Vinylester-Ethylen-Mischpolymerisaten werden erstmals Mittel zur Elastifizierung von Baustoffmassen auf der Basis von Vinylacetat-Ethylen-Mischpolymerisaten zugänglich, welche als Dispersionspulver bezüglich Dehnfähigkeit schutzkolloidstabilisierte Styrol-Acrylat- und Vinylacetat-Ethylen-Pulver deutlich übertreffen. Bisher gebräuchliche Vinylacetat-Ethylen-Polymere zeigten nur ungenügende Dehnfähigkeit und Flexibilität für diese Anwendung; ein Grund dafür, daß in dieser Anwendung bisher nur Styrol/Acrylat-Dispersionen eingesetzt wurden (siehe Volkwein, A et al.).

### Beispiele:

### Erfindungsgemäß zu verwendende Dispersionspulver:

### Dispersion 1:

Wäßrige Dispersion mit einem Festgehalt von 51.5 Gew% eines Vinylacetat-Ethylen-VeoValO-Copolymerisats mit 56 Gew% Vinylacetat, 20 Gew% Ethylen, 24 Gew% VeoVa10^{R} und einer T_{g} von -13°C, welche mit 3 Gew% Polyvinylalkohol mit einem Hydrolysegrad von 88 % und einer Höppler-Viskosität von 4 mPas (4 %-ige Lösung in Wasser bei 20°C) stabilisiert ist.

### Dispersion 2:

Wäßrige Dispersion mit einem Festgehalt von 48 Gew% eines Vinylacetat-Ethylen-VeoValO-Copolymerisats mit 46 Gew% Vinylacetat, 23 Gew% Ethylen, 31 Gew% VeoVa10^{R} und einer T_{g} von -15°C, welche mit 3 Gew% Polyvinylalkohol mit einem Hydrolysegrad von 88 % und einer Höppler-Viskosität von 4 mPas (4 %-ige Lösung in Wasser bei 20°C) stabilisiert ist.

### Dispersionspulver 1 und 2:

Zur Herstellung der Dispersionspulver wurden zu den obengenannten Dispersionen 1 und 2 jeweils 10 Gew%, bezogen auf Polymerisat, eines Polyvinylalkohols mit einem Hydrolysegrad von 88 Mol% und einer Höppler-Viskosität von 8 mPas und 0.3 Gew%, bezogen auf Polymerisat, Entschäumer zugegeben. Die Mischung wurde durch eine Zweistoffdüse versprüht. Das erhaltene Pulver wurde mit 10 Gew% handelsüblichem Antiblockmittel versetzt.

Nicht erfindungsgemäß zu verwendende Vergleichs-Dispersionspulver:

### Dispersion A:

Wäßrige, emulgatorstabilisierte Dispersion mit einem Festgehalt von ca. 55 Gew% eines Styrol-Acrylat-Copolymerisats mit einer T_{g} von -7°C.

### Dispersion B:

Wäßrige, emulgatorstabilisierte Dispersion mit einem Festgehalt von ca. 50 Gew% eines Styrol-Acrylat-Copolymerisats mit einer T_{g} von -7°C.

### Dispersion C:

Wäßrige, emulgatorstabilisierte Dispersion mit einem Festgehalt von ca. 53 Gew% eines Styrol-Acrylat-Copolymerisats mit einer T_{g} von -40°C.

### Dispersionspulver A bis D:

Zur Herstellung der Dispersionspulver A - D wurden den entsprechenden wäßrigen Dispersionen jeweils 10 Gew%, bezogen auf Polymerisat, eines Polyvinylalkohols mit einem Hydrolysegrad von 88 Mol% und einer Höppler-Viskosität von 8 mPas und 0.3 Gew%, bezogen auf Polymerisat, Entschäumer zugegeben. Die Mischung wurde durch eine Zweistoffdüse versprüht, und das erhaltene Pulver mit 10 Gew% handelsüblichem Antiblockmittel versetzt.

### Dispersionspulver A:

Dispersionspulver auf Basis eines Polyvinylakohol-stabilisierten Styrol-Acrylat-Copolymerisats mit einer T_{g} von -7°C.

### Dispersionspulver B:

Dispersionspulver auf Basis eines Polyvinylakohol-stabilisierten Styrol-Acrylat-Copolymerisats mit einer T_{g} von -18°C.

### Dispersionspulver C:

Dispersionspulver auf Basis eines Polyvinylalkohol-stabilisierten Styrol-Acrylat-Copolymerisats mit einer T_{g} von -40°C.

### Dispersionspulver D:

Dispersionspulver auf Basis eines Polyvinylalkohol-stabilisierten Vinylacetat-Ethylen-Copolymerisats mit einer T_{g} von -7°C.

### Anwendungstechnische Prüfung:

Die Dispersionspulver wurden in Dichtungsschlamm-Zusammensetzungen der nachfolgenden Rezepturen I und III getestet.

| Rezeptur | I | III |
|---|---|---|
| | (Gew.T.) | (Gew.T.) |
| Portlandzement PZ 35 | 350 | 350 |
| Quarzsand F 36 | 285 | 185 |
| Arbocell BC 1000 (Faser) | 20 | 20 |
| Melment F 10 (Zementverflüssiger) | 3 | 3 |
| Tixoton CV 15 (Verdickungsmittel) | 37 | 37 |
| Agitan P 800 (Entschäumer) | 5 | 5 |
| Dispersionspulver | 300 | 400 |
| Wasser | 350 | 350 |

Die Rezepturbestandteile wurden 3 Minuten trocken im Mörtelmischer gemischt. Danach wurde das Wasser zugegeben und weitere 2 Minuten gemischt. Nach 10 Minuten Reifezeit wurde der Mörtel 30 Sekunden gemischt und dann mittels Traufel in einer Teflonschablone zu einer 2 mm dicken Dichtschlämme aufgezogen, nach dem Trocknen aus der Schablone entfernt und dann entsprechend der Angaben in Tabelle 1, 2 gelagert.
Nach der Lagerung wurden aus den Dichtschlämmen Schulterstege ausgestanzt von denen in einem Zugversuch nach DIN 53504 auf einer Instron-Zugmaschine bei einer Zuggeschwindigkeit von 10 mm/min Reißfestigkeit und Reißdehnung bestimmt wurden. Die Mittelwerte der einzelnen Meßreihen sind in Tabelle 1 bis 3 angegeben.

Zu den Tabellen:
d = Lagerzeit in Tagen; = Lagerzeit in Minuten;
NK = Normklimalagerung bei 23°C, 50 % rel. Luftfeuchtigkeit;
Naß = Naßlagerung bei 23°C in Wasser;
0°C = Lagerung bei 0°C, 50 % rel. Luftfeuchtigkeit.

Die Meßwerte sind in der Tabelle wie folgt angegeben: Reißdehnung [%] / Reißfestigkeit [N/mm²]

**Tabelle 1**

| (Pulver nach Rezeptur I): | | | | | | |
|---|---|---|---|---|---|---|
| Lagerung | A | B | C | D | 1 | 2 |
| 28d NK | 5.6/2.2 | 5.1/2.8 | 4.5/--- | 13.3/4.3 | 30.7/3.4 | 32.4/2.1 |
| | | | | | | |
| 28d NK 7d Naß | 5.5/2.1 | 5.9/1.1 | 7.2/0.8 | 12.9/4.9 | 12.4/1.2 | 14.6/0.9 |
| | | | | | | |
| 28d NK 14d Naß 14d NK | 1.5/4.4 | 3.5/3.7 | 2.1/3.9 | 9.8/0.9 | 23.0/3.8 | 18.5/3.5 |
| | | | | | | |
| 28d NK 30' 0°C | ---/--- | 5.4/10.5 | 2.1/11.0 | ---/--- | 6.3/10.4 | 14.9/6.8 |

Die mit den Pulvern 1 und 2 (Polyvinylalkohol-stabilisierte Vinylacetat-Ethylen-VeoVa10-Polymerisate) modifizierten Dichtungsschlämme zeigen deutlich bessere Reißdehnung, unter Erhalt der Reißfestigkeit, als Polyvinylalkohol-stabilisierte Styrol-Acrylat-Pulver (Pulver A,B,C) oder Polyvinylalkohol-stabilisierte Vinylacetat-Ethylen-Pulver (Pulver D).

**Tabelle 2**

| (Pulver nach Rezeptur III): | | | | | | |
|---|---|---|---|---|---|---|
| Lagerung | A | B | C | D | 1 | 2 |
| 28d NK | 9.9/2.0 | 10.2/2.7 | 8.7/-- | 19.4/3.9 | 57.2/3.4 | 67.1/1.9 |
| | | | | | | |
| 28d NK 7d Naß | 9.0/1.9 | 9.8/0.9 | 11.2/0.7 | 21.3/0.6 | 48.3/1.0 | 47.2/0.8 |
| | | | | | | |
| 28d NK 14d Naß 14d NK | 2.6/4.4 | 5.9/3.9 | 3.3/4.1 | 14.4/3.8 | 63.7/3.5 | 62.6/3.3 |
| | | | | | | |
| 28d NK 30' 0°C | ---/--- | 10.8/10.7 | 4.1/11.7 | ---/--- | 18.1/10.7 | 29.6/7.6 |

Man erhielt ein analoges Ergebnis zu Tabelle 1: Die mit den Pulvern 1 und 2 (Polyvinylalkohol-stabilisierte Vinylacetat-Ethylen-VeoValO-Polymerisate) modifizierten Dichtungsschlämme zeigen deutlich bessere Reißdehnung, unter Erhalt der Reißfestigkeit, als Polyvinylalkohol-stabilisierte Styrol-Acrylat-Copolymerisate (Pulver A,B,C) oder Polyvinylalkohol-stabilisierte Vinylacetat-Ethylen-Pulver (Pulver D).

## Patentansprüche

1. Verwendung von Schutzkolloid-stabilisierten Vinylester-Ethylen-Mischpolymerisaten in Form der in Wasser redispergierbaren Dispersionspulver, erhältlich durch radikalische wäßrige Emulsionspolymerisation von
a) 15 - 80 Gew% Vinylacetat,
b) 5 - 35 Gew% Ethylen,
c) 5 - 60 Gew%, ein oder mehrere Vinylester aus der Gruppe umfassend Vinyllaurat, Vinylstearat, Vinyl-2-ethylhexanoat sowie Vinylester von alpha-verzweigten, tertiären Carbonsäuren mit 9 bis 11 C-Atomen, und
d) 0 - 10 Gew%, weitere copolymerisierbare ethylenisch ungesättigte Monomere, mit der Maßgabe, daß kein Emulgator enthalten ist,
zur Herstellung von flexibles Baustoffmassen auf der Basis von mineralischen Bindemitteln mit verbesserter Reißdehnung gemäß DIN 53504 im Vergleich zu Vinylacetat/Ethylen-Dispersionspulver wobei die Baustoffmassen der Gruppe Dichtungsschlämme, Baukleber, Fugenmörtel Reparaturmörtel, rißüberbrückende Putze angehören.

2. Verwendung nach Anspruch 1, wobei als Comonomere c) Vinylester von alpha-verzweigten Carbonsäuren mit 9, 10 oder 11 C-Atomen eingesetzt werden.

3. Verwendung nach Anspruch 1, wobei Vinylester-Ethylen-Copolymerisate enthaltend
a) 40 - 70 Gew% Vinylacetat,
b) 10 - 30 Gew% Methylen,
c) 20 - 40 Gew%, ein oder mehrere Vinylester von alpha-verzweigten, tertiären Carbonsäure mit 9, 10 oder 11 C-Atomen eingesetzt werden.

4. Verwendung nach Anspruch 1 bis 3, wobei als Schutzkolloide teilverseifte Polyvinylalkohole mit einem Hydrolysegrad von 75 bis 95 Mol% und einer Höppler-Viskosität (4 %-igen Lösung in Wasser bei 20°C) von 4 bis 35 mPas enthalten sind.

5. Verwendung nach Anspruch 1 bis 4, wobei die Schutzkolloidstabilisierten Vinylester-Ethylen-Mischpolymerisate in einer Menge von 10 bis 50 Gew%, Copolymeranteil, bezogen auf Gesamtgewicht der Trockenformulierung, enthalten sind.

## Claims

1. Use of protective colloid-stabilized vinyl ester-ethylene copolymers which are in the form of water-redispersible dispersion powders and are obtainable by free-radical, aqueous emulsion polymerization of
a) 15 - 80% by weight of vinyl acetate,
b) 5 - 35% by weight of ethylene,
c) 5 - 60% by weight of one or more vinyl esters from the group consisting of vinyl laurate, vinyl stearate, vinyl 2-ethylhexanoate and vinyl esters of alpha-branched, tertiary carboxylic acids having from 9 to 11 carbon atoms, and
d) 0 - 10% by weight of further copolymerizable ethylenically unsaturated monomers, with the proviso that no emulsifier is contained,
for producing flexible building compositions based on mineral binders having improved elongation at break according to DIN 53504 compared to vinyl acetate-ethylene dispersion powder, wherein the building compositions belong to the group consisting of sealing slurries, building adhesives, jointing mortars, repair mortars, crack-bridging plasters and renders.

2. Use according to Claim 1, wherein the comonomers c) used are vinyl esters of alpha-branched carboxylic acids having 9, 10 or 11 carbon atoms.

3. Use according to Claim 1, wherein the vinyl ester-ethylene copolymers used comprise
a) 40 - 70% by weight of vinyl acetate,
b) 10 - 30% by weight of ethylene and
c) 20 - 40% by weight of one or more vinyl esters of alpha-branched, tertiary carboxylic acids having 9, 10 or 11 carbon atoms.

4. Use according to Claims 1 to 3, wherein the protective colloids present are partially saponified polyvinyl alcohols having a degree of hydrolysis of from 75 to 95 mol% and a Höppler viscosity (4% strength solution in water at 20°C) of from 4 to 35 mPas.

5. Use according to Claims 1 to 4, wherein the protective colloid-stabilized vinyl ester-ethylene copolymers are present in an amount of from 10 to 50% by weight, proportion of copolymer based on the total weight of the dry formulation.

## Revendications

1. Utilisation de copolymères ester de vinyle/éthylène sous la forme de poudres de dispersion redispersables dans l'eau stabilisés par un colloïde protecteur, qui peuvent être obtenus par polymérisation radicalaire en émulsion aqueuse de
a) 15-80% en poids d'acétate de vinyle,
b) 5-35% en poids d'éthylène,
c) 5-60% en poids d'un ou plusieurs esters vinyliques dans le groupe comprenant le laurate de vinyle, le stearate de vinyle, le vinyl-2-éthylhexanoate ainsi que les esters vinyliques d'acides carboxyliques tertiaires alpha-ramifiés avec 9 à 11 atomes de carbone, et
d) 0-10% en poids d'autres monomères éthyléniquement insaturés copolymérisables, étant entendu qu'aucun émulsionnant n'est contenu,
pour la fabrication de substances de matériau de construction souples à base de liants minéraux avec allongement à rupture amélioré selon DIN 53504 en comparaison avec du poudre de dispersion d'acétate de vinyle/éthylène, dans laquelle les substances de matériau de construction appartiennent au groupe des boues d'étanchéité, colles de construction, mortiers pour joints, mortiers de réparation, enduits de colmatage de fissure.

2. Utilisation selon la revendication 1, dans laquelle on utilise comme comonomères c) des esters vinyliques d'acides carboxyliques ramifiés avec 9, 10 ou 11 atomes de carbone.

3. Utilisation selon la revendication 1, dans laquelle on utilise des copolymères ester de vinyle/éthylène contenant
a) 40-70% en poids d'acétate de vinyle,
b) 10-30% en poids d'éthylène,
c) 20-40% en poids d'un ou plusieurs esters vinyliques d'acides carboxyliques tertiaires alpha-ramifiés avec 9, 10 ou 11 atomes de carbone.

4. Utilisation selon les revendications 1 à 3, dans laquelle, des poly(alcools de vinyle) partiellement saponifiés avec un degré d'hydrolyse de 75 à 95% en mole et une viscosité d'Höppler (solution à 4% dans de l'eau à 20°C) de 4 à 35 mPa.s, sont contenus comme colloïdes protecteurs.

5. Utilisation selon les revendications 1 à 4, dans laquelle les copolymères ester de vinyle/éthylène stabilisés par un colloïde protecteur sont contenus en une quantité de 10 à 50% en poids, proportion en copolymère, sur base du poids total de la formulation sèche.
